# EUROPEAN PATENT APPLICATION

(11) **EP 0 643 021 A1**
(43) Date of publication of application: **15.03.1995**
(21) Application number: 94202486.0
(22) Date of filing: 31.08.1994
(51) Int. Cl.: C03C 3/06, H01K 1/32

(54) **Electric incandescent lamp with a quartz glass lamp vessel and quartz glass tube for said lamp**

(30) Priority: 01.09.1993 EP 93202554
(71) Applicant: PHILIPS ELECTRONICS N.V., 5621 BA Eindhoven (NL)
(72) Inventor: Terheijden, Joannes, 5656 AA Eindhoven (NL); van den Eijnden, Peter Eugène Marie, 5656 AA Eindhoven (NL)
(74) Representative: Rooda, Hans

(57) **Abstract**

The electric incandescent lamp has a quartz glass lamp vessel (1) or envelope (4') around the lamp vessel, which has a red coloured dope in the area at the side of the incandescent body (3). The quartz glass with red dope contains samarium^{II} oxide, aluminium oxide and silicon dioxide, the analysis of the glass in its oxidised form being Sm₂O₃ 1 to 3 % by weight, Al₂O₃ up to 3 % by weight, rest SiO₂, the molar ratio Al/Sm being at least 2.

## Description

The invention relates to an electric incandescent lamp with a tubular quartz glass lamp vessel having an axis, in which lap vessel an incandescent body is axially arranged and is laterally surrounded by quartz glass with a red dope. The invention also relates to a quartz glass tube with a red dope suitable for this electric incandescent lamp.

Such an incandescent lamp is known from US 3,258,631.

The known lamp has a lamp vessel which, laterally of the incandescent body, comprises a dope which colours the lamp vessel red, and which is colourless around the portions beyond the incandescent body.

The manufacture of the lamp vessel starts with a tube of porous glass of high SiO₂ content which is impregnated between its ends at the outer surface with a solution of salts, for example, of iron, nickel and aluminium salts, and which is thermally treated in order to convert the salts into oxides and eliminate the pores. The manufacture of the glass tubing for the lamp vessel is very elaborate and therefore expensive.

GB 2,176,587-A discloses an electric incandescent lamp whose incandescent body is laterally surrounded by quartz glass with a red dope in that the lamp vessel is accommodated in a tube of that glass. In this lamp, the tube is coupled to the lamp by being enclosed between the lamp caps of the lamp so as to form a unit. Alternatively, the tube may be a separate body. It is a disadvantage of lamps having an enveloping tube that the lamp vessel can only be linear because bending of concentric tubes and providing a bent tube around another bent tube are either not possible at all or not possible on an industrial scale.

A red quartz glass tube is clamped around the lamp vessel by means of resilient members in other commercially available lamps. Alternatively, a red quartz glass tube may be loosely arranged around the lamp vessel, not as a body coupled to the lamp.

Lamps of the kind described may be used for heating purposes, for example, for room heating, preparation of food such as cooking, or as a heat source in industrial processes such as drying or curing of ink or paint. It is the purpose of the red quartz glass to prevent that the light generated by the lamp is radiated with an unpleasant intensity.

GB 1,036,726 discloses glass compositions of quartz glass with a dope of at least a compound of one of the metals having atomic numbers 22 to 29, 60, 62, 68, 74 and 92, with the possible addition of an aluminium compound. The composition is manufactured from the components by fusion at 1600-2200 °C, in air if purified sand is the basic material, in a vacuum of less than 666 Pa if quartz powder is the basic material.

It is an object of the invention to provide an electric lamp of the kind described in the opening paragraph, and a quartz glass tube with a red dope for such a lamp, which are easy to manufacture.

According to the invention, this object is achieved in that the quartz glass with the red dope comprises samarium^{II} oxide, aluminium oxide and silicon dioxide, and upon analysis in oxidised form is found to contain, apart from oxides of trace elements, 1-3% by weight Sm₂O₃, up to 3% by weight Al₂O₃, while the remainder is SiO₂, the molar ratio Al/Sm being at least 2.

The quartz glass with the red dope has an orange-red to dark red colour and is easily manufactured from the batch at a temperature of, for example, approximately 2000 °C, and can be given a tubular shape by usual techniques. At Sm₂O₃ contents below 1% by weight, the glass has a too weak red colour and transmits too much light for practical applications, whereas at contents above 3% by weight, the Sm₂O₃ dissolves in the quartz glass with insufficient homogeneity for practical applications and reduces the SiO₂ content of the glass too much.

In spite of its colour, a tube made of the glass can be processed, for example, for providing a vacuumtight seal therein. A stronger heat source must be used for this, however, than for a corresponding tube of colourless quartz glass because the red quartz glass radiates much heat. Those skilled in the art, however, may readily ascertain the configuration of heat sources required for a given tube and process, such as bending, inflating, upsetting, and blowing out, in a few experiments.

Trace elements which may be present as impurities may be sodium and potassium, each up to a quantity of several ppm by weight, and iron up to a few tenths of ppm by weight.

The cited GB 1,036,726 mentions in Example 15 a quartz glass with 0.3% Sm₂O₃ by weight, 0.1% Al₂O₃ by weight, and the remainder SiO₂, prepared from quartz sand in vacuo or from purified sand in air. A brownish-orange quartz glass is obtained under these conditions. Samarium retains its preferred trivalent form. Samarium can be converted from its trivalent form Sm^{III} into its bivalent form Sm^{II} only with difficulty.

Surprisingly, however, this can be realised to a sufficient degree when a small quantity of reducing agent is added to the batch and the melt is made under hydrogen. It is favourable to add metallic silicon, for example, in a quantity of up to approximately 0.1% by weight, to the batch as a reducing agent because no foreign compound is introduced into the glass thereby. Once embedded in the glass, Sm^{II} is sufficiently protected from oxidation. The aluminium oxide in the glass ensures a sufficient solubility of samarium in the quartz glass lattice. Samarium is badly dissolved in the glass at a molar Al/Sm ratio below 2, whereas the SiO₂ content of the glass has become too low for may applications at molar ratios in which the Al₂O₃ content is above 3% by weight.

The presence of Sm^{II} becomes apparent in the colour of the quartz glass and in the transmission spectrum thereof. Because of its sensitivity to oxidation, however, it is difficult to determine the Sm^{II} content of the glass besides any Sm^{III} analytically.

Embodiments of the electric incandescent lamp according to the invention are shown in the drawing, in which
Fig. 1 is a side elevation of a first embodiment;
Fig. 2 is a side elevation of a second embodiment; and
Fig. 3 shows the transmission spectra of the red quartz glasses from Figs. 1 and 2.

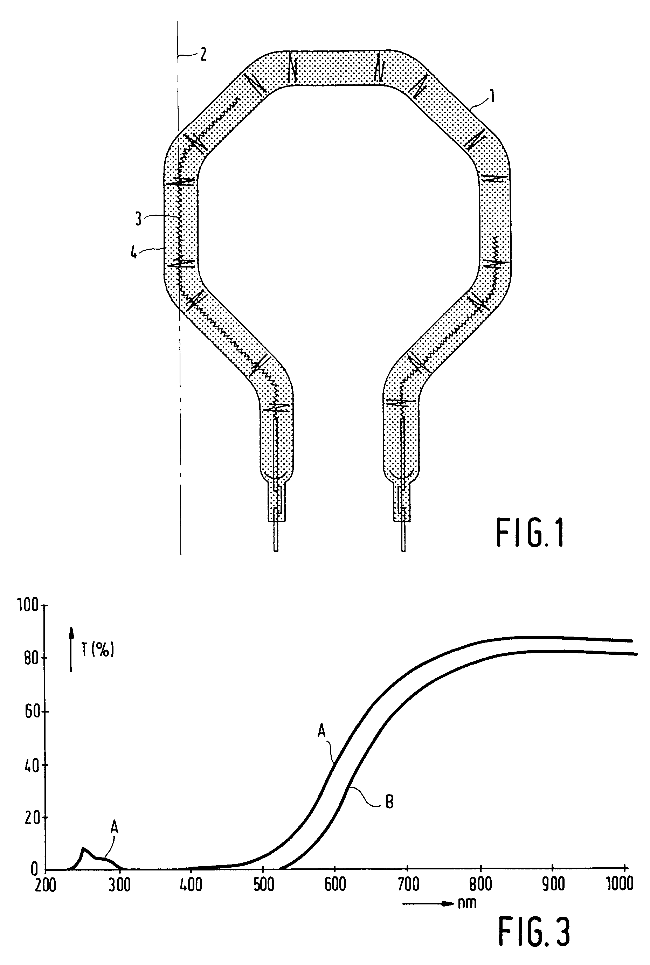

In Fig. 1, the electric incandescent lamp has a tubular quartz glass lamp vessel 1 with an axis 2. An incandescent body 3 is axially arranged therein. The incandescent body is laterally surrounded by quartz glass with a red dope.

The quartz glass 4 with the red dope comprises samarium^{II} oxide, aluminium oxide and silicon dioxide, and comprises upon analysis in oxidized form 1-3% Sm₂O₃ by weight, up to 3% Al₂O₃ by weight, and the remainder SiO₂, besides oxides of trace elements, while the molar ratio Al/Sm is at least 2.

The lamp shown is particularly suitable for use as a cooking lamp. The quartz glass with the red dope of which the lamp vessel is made comprises upon analysis in oxidized form, apart from trace elements, 1.1% Al₂O₃, by weight, 1.1% Sm₂O₃ by weight, and for the rest SiO₂.

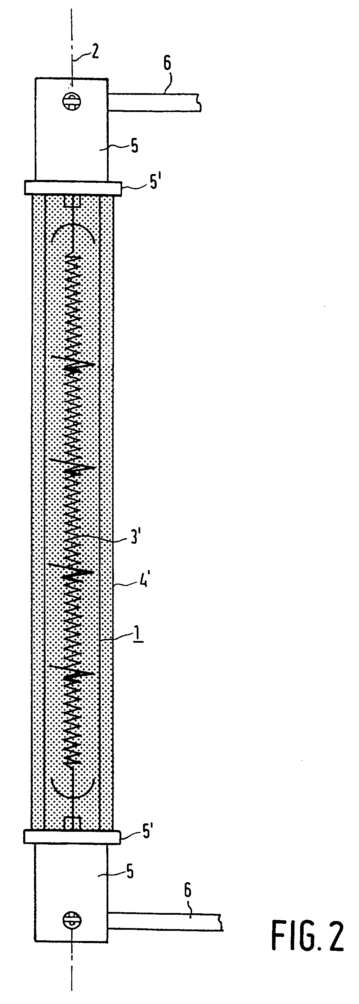

The lamp of Fig. 2 has a lamp vessel 1' of colourless quartz glass provided with a lamp cap 5 at either end. The lamp vessel is surrounded by a quartz glass tube 4' which is held fixed in position by the lamp caps 5. The lamp caps each have a collar 5', for this purpose. Cables 6 issue from the lamp caps to the exterior for connection of the lamp to a supply source at a distance. The quartz glass tube is found to contain upon analysis in oxidized form, apart from trace elements, 2.2% Al₂O₃ by weight, 2.2% Sm₂O₃ by weight, and for the rest SiO₂. The lamp may be used, for example, for room heating.

In Fig. 3, curve A is the transmission curve of the red glass of Fig. 1 and curve B that of the red glass of Fig. 2.

## Claims

1. An electric incandescent lamp with a tubular quartz glass lamp vessel (1) having an axis (2), in which lamp vessel an incandescent body (3) is axially arranged and is laterally surrounded by quartz glass with a red dope, characterized in that the quartz glass (4) with the red dope comprises samarium^{II} oxide, aluminium oxide and silicon dioxide, and upon analysis in oxidized form is found to contain, apart from oxides of trace elements, 1-3% by weight Sm₂O₃, up to 3% by weight Al₂O₃, while the remainder is SiO₂, the molar ratio Al/Sm being at least 2.

2. An electric incandescent lamp as claimed in Claim 1, characterized in that the quartz glass lamp vessel (1) is made of the quartz glass with the red dope.

3. A quartz glass tube with a red dope suitable for use in the electric incandescent lamp as claimed in Claim 1 or 2.
